# EUROPEAN PATENT SPECIFICATION

(11) **EP 1 773 578 B1**
(45) Date of publication and mention of the grant of the patent: **16.11.2011**
(21) Application number: 05739757.2
(22) Date of filing: 03.05.2005
(51) Int. Cl.: B32B 3/24

(54) **OXYGEN ABSORBING PACKAGING MATERIAL**
SAUERSTOFFABSORBIERENDES VERPACKUNGSMATERIAL
MATERIAU D'EMBALLAGE ABSORBANT L'OXYGENE

(30) Priority: 13.07.2004 US 889731
(43) Date of publication of application: 18.04.2007
(73) Proprietor: Multisorb Technologies, Inc., Buffalo, NY 14224-1893 (US)
(72) Inventor: POWERS, Thomas, Mayville, NY 14757 (US)
(74) Representative: James, Anthony Christopher W.P.
(86) International application number: PCT/US2005/015236
(87) International publication number: WO 2006/016916

(56) References cited:
- WO-A-02/057328
- US-A- 5 061 772
- US-A- 5 641 425
- US-A- 5 721 187
- US-A- 6 083 585
- US-A- 6 156 231

## Description

### FIELD OF THE INVENTION

This invention relates in general to oxygen-absorbing compositions and In particular to oxygen-absorbing compositions used in packaging materials.

### BACKGROUND OF THE INVENTION

Many products are susceptible to putrefaction, denaturation, mold growth, spoilage, rancidity, oxidation, or other deterioration when brought into contact with oxygen. Examples of such products include beer, wine, juice, vinegar, sauces, seasonings, processed foods, bread, produce, meats, and certain pharmaceuticals and chemicals, among a variety of others. Preservation of such products is disturbed when molds, bacteria, and other organisms that thrive in the presence of oxygen are present. These organisms cause the putrefaction and change in the taste or quality of the product. In addition, some of the products themselves are liable to be affected by oxidation that changes the taste or quality of the product. To prevent such oxidation and growth of organisms and thus increase the preservation stability of these products, the oxygen must be removed from the container in which the products are stored.

One technique for avoiding or reducing the presence of oxygen is vacuum packing. This involves evacuating a container after charging it with the product. Another technique is gas flushing or displacement. Here, an inert gas such as nitrogen is used to displace the air and hence the oxygen in a container. The displacement can be performed before or after the product is charged to the container.

Common disadvantages associated with the above techniques are the requirement of a large-scale operation and the difficulty of removing oxygen dissolved In the product. Also, in general, these techniques leave between 0.2% and 5.0% of the oxygen in the container. This amount of oxygen in the container is enough to adversely affect many products.

A simpler, more efficient technique for oxygen removal involves placing an oxygen absorbent in the container with the product. For this purpose, it is known to dispose an oxygen absorbent within a resin that is solid at room temperature. For example, in U.S. Patent No. 5,143,763, compositions are disclosed having an oxygen absorbent disposed in a resin such as polyethylene, polypropylene, and ethylene-vinyl acetate copolymer, among others. U.S. Patent No. 5,089,323 discloses compositions having an oxygen absorbent contained in thermoplastic resins such as low-density branched polyethylene, high-density polyethylene, propylene homopolymers, and copolymers of ethylene and vinyl acetate, among others.

Several limitations are inherent, however, in the process of applying a solution by screen printing. In order to print the solution, the screen must be pressed against the substrate upon which the solution is to be printed. When the screen is lifted to move to another print location on the substrate, the surface tension and viscosity characteristics of a solution are such that there is not a clean, complete separation between the solution that has been printed on the substrate and the solution remaining on or behind the screen. This results in a poor quality print that is difficult to control.

Another drawback with these methods is that often a separate device, such as a sachet or canister, must be placed into the food or pharmaceutical product, for example. This leads to the problem, among others, of having to have it disposed by the consumer upon opening the package. In addition, many such sachets or canisters are labeled, "Do Not Eat" which can be construed by a consumer as undesirous for mixing with a food, pharmaceutical, or other consumable product.

US-A-5641425 and US-B-6156231 describe adhesive, oxygen-absorbing "abels" for the attachment to the inside of a food package. The oxygen absorbing layer is formed by dispersing an oxygen absorbent in an emulsion to form an oxygen absorbing composition and transferring the composition onto a substrate.

WO02/057328 describes oxygen scavenging polymer emulsions suitable for use as coatings, adhesives or sealants.

US-B-6083585 describes oxygen scavenging condensation copolymers for bottles and packaging articles. The copolymers comprise conventional polyester segments in combination with oxygen scavenging polyolefin oligomer segments.

US-A-5061772 describes methods of making comb-shaped copolymers with a hydrocarbon backbone and pendant polylactone side chains.

US-A-5721187 describes oxygen absorbing layers formed from 15-80% by weight of thermoplastic resin and 85-20% by weight of an oxygen absorbing agent.

### SUMMARY OF THE INVENTION

The present invention provides a support structure for supporting a food product in a package, wherein said support structure is formed of an oxygen-absorbing packaging material comprising: a base layer; an oxygen absorbing composition disposed on at least one side of the base layer, said oxygen absorbing composition comprising an oxygen absorbent contained in an emulsion; a film layer disposed on said oxygen absorbing layer; at least one of said base layer and said film layer having printed indicia to indicate information relating to a product to be contained within said packaging material.

The printing appears on either or both of the base layer and film layer. The oxygen absorbing composition can be on one or both sides of the base layer, so long as it is covered by the film layer.

It is to be understood that both the foregoing general description and the following detailed description are exemplary of the invention and are not intended to be exhaustive or restrictive.

### BRIEF DESCRIPTION OF THE DRAWING

The invention is best understood from the following detailed description when read in connection with the accompanying drawing, in which.
Fig. 1 is a top view of an exemplary embodiment of the present invention;
Fig. 2 is a cross-sectional view of the exemplary embodiment of Fig 1;
Fig. 3 is a close-up cross-sectional view of the section encircled in Fig. 2;
Fig. 4 is an embodiment of the present invention including an oxygen absorbing card with printing thereon;
Fig. 5A is a front view of a coupon in accordance with the present invention;
Fig. 5B is a side view of the coupon of Fig. 5A; and
Fig. 6 is a cross-sectional view of an embodiment of the present invention with perforations on both the thin film layer and substrate.

### DETAILED DESCRIPTION OF THE INVENTION

The present invention provides a combination of a packaging material upon which printing or advertising can appear, and an oxygen absorbing composition, whereby the presence of the oxygen absorbing composition is not realized by a consumer. The oxygen absorbents (or "reactants") are dispersed in multiple-component carriers, specifically emulsions. By dispersing an oxygen absorbent in such a multi-component system, the resulting composition can be easily applied to a suitable substrate and covered by an oxygen permeable film. One or both of the substrate or film has printing, such as instructions for use of the product contained therein, or other printing, such as advertising, thereby combining the function of the oxygen absorption with a functional packaging material. But only the printed packaging material is viewable by the consumer who is prevented From seeing the oxygen absorbing composition because it is made a part of the packaging material and hidden therein.

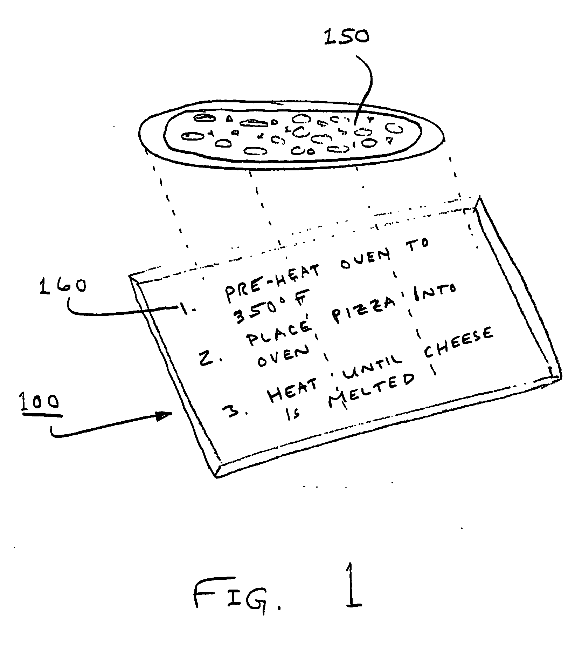

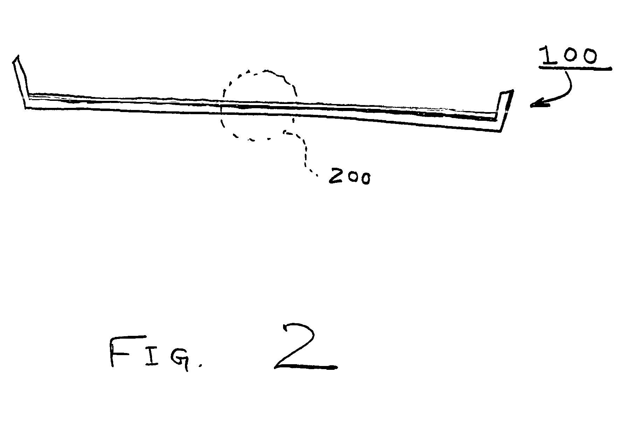

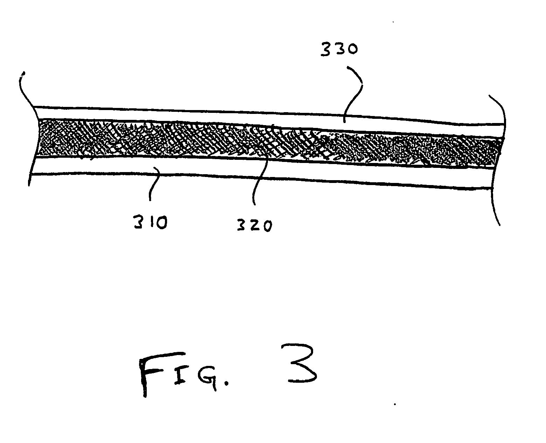

Fig. 1 shows a preferred embodiment where a pizza package tray 100 is constructed in accordance with the present invention. Pizza 150 is shown lifted from the tray to reveal preparation instructions 160 which have been printed on the top layer of tray 100. Tray 100 is a multi-layered packaging material which is comprised of a support layer and an oxygen absorber covered by a thin oxygen permeable layer. The thin, oxygen permeable layer has information printed on it to provide the consumer with instructions on prepaying the pizza. No extra oxygen absorbing package or material is needed within the package, and thus there is no extra packaging or visible oxygen absorbing packet loose within the food or pharmaceutical package. Indeed, the consumer does not even know that there is an oxygen absorber present within the package. Fig. 2 shows a cross-sectional view of packaging tray 100, and Fig. 3 shows a close-up cross sectional view of the portion of tray 100 encircled by dotted line 200 in Fig. 2.

As better seen in Fig. 3, the three layers of tray 100 are comprised of substrate 310 (preferably paper), oxygen absorber 320, and thin film cover layer 330 which is oxygen permeable. Each of these layers is described in more detail below.

In the embodiment of the invention described above, the substrate upon which the oxygen absorbing composition is applied is a suitably rigid paper which can serve as a support structure in a package for a food product such as a frozen pizza or baked good. Thus, the consumer receives the product, held by what appears to be a simple sheet of support paper. There is no separate oxygen absorbing packet or other device. There is printing on the package which could include a coupon for a future purchase, heating or preparation instructions, or simply advertising material for similar or different goods or services. The printing could also be placed on the side of the substrate opposite the side to which the oxygen absorbent and thin film are applied. Thus, printing could be applied to both the thin film layer, as shown in Fig. 1, and also the back of the paper substrate (not shown) to provide additional averting on the product package.

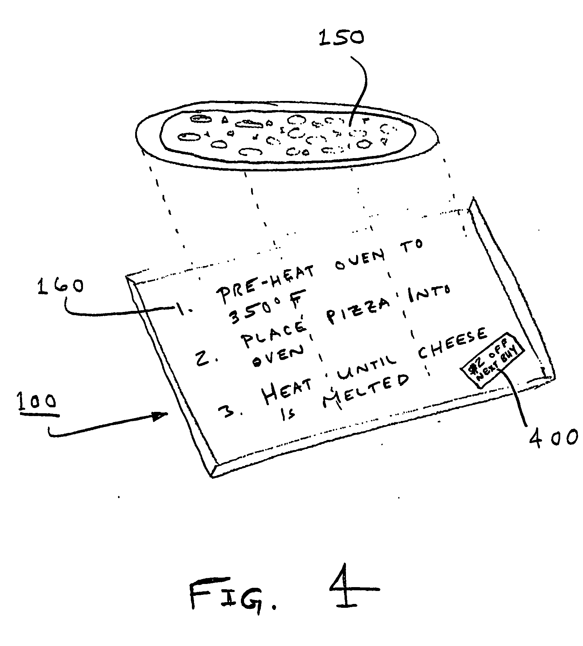

In another embodiment of the invention, the packaging material could be used for the dual purpose of oxygen absorber and coupon. In the case of using the material as a coupon, either a tear-away coupon constructed as a part of the overall package could be used, or a loose, oxygen absorbing coupon within the larger package could be employed. In the former situation, perforations or cutting lines could be provided to make it easier for the consumer to remove the coupon from the rest of the package. Fig. 4 shows the latter embodiment wherein a loose oxygen-absorbing coupon 400 is included within the package of Fig. 1. Of course, if oxygen absorbing coupon 400 is large enough and thereby has at least a minimum oxygen absorbing capacity, the tray itself could be any from a variety of non-oxygen absorbing trays of the prior art. Preferably, however, the invention provides the tripartite function of structural support, printing, and oxygen absorber all combined in a packaging material which appears to a consumer to only have a dual function of structure with information printed on it.

The packaging material of this invention takes advantage of emulsions which can be easily applied by printing them directly onto a substrate. The oxygen absorbing compositions of the present invention, by virtue of the oxygen absorbent being contained in an emulsion, are capable of containing greater amounts of oxygen absorbent and have better oxygen permeability than known formulations having solids or solutions containing the reactants. In addition, use of emulsions allows inclusion of other components in the composition, such as hydragels, that enable using the compositions in low humidity environments, as well as high humidity environments.

The emulsions used in the present invention have a viscosity and total solids content sufficient to hold the reactants in a stable suspension, as well as a surface tension and viscosity that change when mixing or pumping in a thixotropic or pseudoplastic manner. These properties make the emulsion suitable for printing on, for example, a rotary screen, reverse roll, or gravure roll printer.

In addition, the emulsions used in the present invention are chemically, biochemically, and physically compatible with the reactants, substrate materials (upon which the compositions are applied), and the products being protected from the presence of oxygen. Compatibility with reactants means that the emulsion neither reacts with any of the reactants nor inhibits the reaction of the reactants with oxygen. Compatibility with the substrate material requires that the surface tension of the emulsion be sufficiently low and the film-forming properties be such that a uniform layer can be deposited and maintained until it gels or dries. Compatibility with the products being protected requires that the emulsion be suitable for direct contact with food, pharmaceuticals, medical diagnostics, or other products.

Oxygen absorbents which can be contained in the emulsions used in the present invention include iron and glucose oxidase. A salt may be used as an electrolyte for oxidation of the iron. The iron may be hydrogen-reduced iron, electrolytically reduced iron, or chemically reduced iron. Although iron is preferred as the metallic oxygen absorbing agent, it will be appreciated that other metals may be used. These are, by way of example and not limitation, aluminum, copper, zinc, titanium, magnesium, and tin. Also, other elements which can be used in elemental or partially oxidized form are sodium, manganese, iodine, sulfur, and phosphorus.

The electrolytic salt may be sodium chloride or any other suitable food compatible salt including, but not limited to, sodium sulfate, potassium chloride, ammonium chloride, ammonium sulfate, calcium chloride, sodium phosphate, calcium phosphate, and magnesium chloride. For non-food products, other non-food compatible salts can be used. Both the salt and the iron are preferably between 48 and 325 mesh.

The oxygen absorbing compositions used with the present invention are intended for use in either low-moisture or high-moisture environments. Certain packages have a high moisture content. For such packages, the oxygen absorbing compositions used with the present invention can contain a moisture absorbent such as silica gel or a molecular sieve to activate the oxygen absorbing action and to absorb moisture from the container. Other packages, such as those storing fried foods (e.g., potato chips), have very low moisture content and the oxygen absorbing composition may contain a moisture carrying material such as a hydrogel, activated carbon, or other material to release the moisture necessary to activate the oxygen absorbing action.

Disclosed below are some exemplary emulsions that incorporate the specific requirements set forth above and are used to suspend oxygen absorbing reactants. Each of these emulsions has different functional properties and a slightly different intended application. These are only exemplary of emulsions which can be used with the present invention to provide the function of structure, oxygen absorbent, and printed information in a package material which, to a consumer, only appears to offer structure and printed information.

First, an alginate gel emulsion system is disclosed as a carrier for the reactants and, optionally, a hydrogel or other moisture binding component.

Second, a xanthan gum emulsion system is disclosed. This emulsion may be used to suspend the reactants and to permit use of alcohol as part of the system. Alcohol is useful because it speeds drying. A hydrogel may also be used in this formulation.

Third, a microcrystalline cellulose emulsion system can be used. This emulsion may also contain water or alcohol or both. The system is compatible with both hydrogel and the reactants and, in addition, has a very low surface tension. The low surface tension allows clean reparation of the composition on a printing substrate from the composition on, for example, the screen on a rotary screen printer during the short "break" required in high speed printing as the printer changes from one printing location to another. Further, microcrystalline cellulose has a thermogeliation characteristic which iends stability to the printed film while drying. The system may also incorporate some xanthan gum in order to maintain pseudoplastic viscosity and flow characteristics.

Of the various emulsions, the microcrystalline cellulose formulation is most adapted to hold in stable suspension all of the various ingredients, such as iron, hydrogel, and salt. This formulation is also more salt tolerant than the other emulsions.

Finally, three commercially prepared adhesive emulsions are disclosed to suspend the oxygen absorbing reactants. These adhesive emulsions are an acrylic polymer in water emulsion, a polyvinyl acetate In water emulsion, and a vinyl acetate-ethylene copolymer in water emulsion.

Emulsions which can be used with the present invention will now be illustrated in greater detail by way of the following examples. It should be understood, however, that the scope of the present invention is not limited by these specific examples.

The oxygen absorption tests in the following examples were conducted in pint, quart, and two-quart size mason type canning jars. The compositions described in the examples were either hand-printed using a rotary screen or coated using a #24 gravure roller onto a substrate. The compositions on the substrates were then placed into jars which were then sealed, and the amount of oxygen absorbed by the card was measured. In all of the examples, with one exception, the jars also contained water on blotter paper affixed to the side of the jar to supply moisture for the reaction. The one exception was the example containing hydrogel, which itself supplies water so that no additional source of water was needed. In the tests where water on blotter paper was used, the printed or coated oxygen absorbing material was dried at 93°C (200° F).

The oxygen that was absorbed by the cards having the various compositions thereon was determined by an oxygen analyzer, available from Illinois Instruments, which measured the oxygen level present in each jar while the card was in the jar. Where the testing vessel was flushed with carbon dioxide, the initial oxygen content was measured. The reduced amount of oxygen present in the jar was considered the amount absorbed by the card. In all of the examples, the amount of oxygen absorbed was satisfactory.

### EXAMPLE 1: THE ALGINATE GEL EMULSION

To form the alginate gel emulsion, the following were combined in the given weight percentages.

| | |
|---|---|
| Sodium-alginate (low viscosity) | 2.25% |
| Polysorbate 80 | 1.00% |
| Sodium-proplonate | 0.20% |
| Distilled water | 96.55% |

Preparation required a high shear mixer. In this example, a Kitchen Aid brand five-quart mixer was used. The ingredients were first dispersed within the water, then mixed at low speed for 15 minutes, then mixed at medium speed for 15 minutes. The mixing produced foam on the emulsion and entrained air within the emulsion. It required several hours (overnight in this example) after mixing for the foam to break and the entrained air to escape.

One part of the alginate emulsion described above was then combined with one part of 200 mesh electrolytically reduced iron containing two weight percent sodium chloride to form an oxygen absorbing composition. The formulation was printed onto a substrate to form a card. The printed oxygen absorbing composition was dried with heat, but enough moisture was left in the deposit so that an additional moisture source was not needed. The cards were then placed into the inside of mason jars and their oxygen absorption rates were measured as follows (the variation among the three tests having equal print weight deposits is normal test variation):

| Rate of Oxygen Absorption | | | |
|---|---|---|---|
| | #1 | #2 | #3 |
| Weight of print deposit per cm²(per in²) | 0.23g (1.50 g) | 0.23g (1.50 g) | 0.23g (1.50g) |
| 16 hr | 13cc O₂ | 14cc O₂ | 20cc O₂ |
| 24 hr | 16cc O₂ | 14cc O₂ | 22cc O₂ |
| 47 hr | 26cc O₂ | 22cc O₂ | 34cc O₂ |
| 135 hr | 54cc O₂ | 41cc O₂ | 62cc O₂ |

Sodium alginate was used in the emulsion of this example (rather than propylene glycol alginate) because it is soluble and stable at neutral to slightly alkaline pH. The low viscosity version was used because it permits a higher concentration of the alginate within the emulsion without an excessively high viscosity. The product used in this example was brand name Keltrol^{®} KNLV, available from Merck & Co., Inc. Although the example described contained 2.25 weight percent sodium alginate, the weight percent of sodium alginate may be in the range of 0.2% to 10%, with a preferred range of 1.0% to 3.5%.

Polysorbate 80 was used in the emulsion of this example as a surfactant to reduce surface tension. Without a surfactant, the emulsion does not deposit cleanly or remain in a thin film. Because the medium was aqueous, a hydrophillc surfactant was required. Polysorbate 80, with a hydrophilic lipophilic balance of 14-15, is the most hydrophilic food grade surfactant available. The product used in this example was brand name Durfax^{®} 80 from Van den Berg Foods. Although the example described contained 1.0 weight percent Polysorbate 80, the weight percent of Polysorbate 80 may be in the range of 0.1% to 10%, with a preferred range of 0.5% to 1.5%.

Sodium propionate was used as a preservative in this emulsion because there were some metabolizable carbohydrates remaining in the alginate. Because there are virtually no simple sugars, yeast and bacteria are not the principal classes of spoilage organisms. Protection is needed against molds and fungi wich can break down complex carbohydrates. Many of the likely candidates such as sorbates and benzoate derivatives either have limited solubility at neutral pH or are minimally effective in the salt form. The sodium proplonate used in this example was an effective preservative.

A 1:1 ratio of iron to alginate gel was used in this example. This can be expanded to ratios above 2:1. The preferred weight percent range of iron within the alginate suspension is 50% to 60%, but can satisfactorily be In the range from 30% to 80%. The iron may contain, by weight, from 0.1% to 5.0% sodium chloride, with a preferred range of 1.5% to 2.5%.

A planetary mixer with a wire whip may be used to mix the ingredients of the emulsion in the water provided the alginate gel granules are first added to the water slowly so that each grain is wetted individually to avoid clumping. Once this is done, the Polysorbate 80 may be added. The sodium propionate may optionally be added before the gum so that it will easily dissolve.

In an alternative embodiment, hydrogel may be blended into the emulsion at levels up to 40 weight percent once it is ready for printing or coating. The preferred weight percent range for hydrogel is 8% to 18%. The amount of hydrogel added to the emulsion depends to a degree on the amount of iron in the emulsion. The less iron, the more hydrogel can be added.

Two weight percent fine CaCl₂ may be added to the print dispersion to induce gelation of the alginate. It is believed that any compound containing calcium will also induce gelation.

As an alternative application method, the emulsion may first be printed or coated onto a substrate and the oxygen absorbing reactants may then be deposited thereon. After coating or printing by any method, if desired, a divalent metal Ion such as fine powdered CaCl₂ may be deposited onto the emulsion to induce gelation of the alginate. Ca(OH)₂ may be a satisfactory alternative for this purpose.

The emulsion of this example is ready to use after the foam created by mixing breaks and the entrained air escapes. The emulsion remains stable for several weeks at room temperature, although the iron may react with the water in the emulsion with time, Increasing the pH In the emulsion may help prevent the reaction (this appries to all of the compositions herein).

### EXAMPLE 2: THE XANTHAN GUM EMULSION

To form the xanthan gum emulsion, the following were combined In the given weight percents:

| | |
|---|---|
| Xanthan gum | 2.0% |
| isopropyl alcohol | 43.0% |
| Tap water | 55.0% |

The xanthan gum is available as a single grade from Merck under the brand name Keltrol^{®} KT. The xanthan gum may be 0.1 to 5.0 weight percent of the emulsion, with a preferred range of 0.5% to 1.5%. The dispersion technique used was similar to that used with the alginate emulsion above because careful addition to water is necessary to prevent clumping.

The components were mixed in a planetary mixer. The xanthan gum was slowly added to the water alone, The addition took 5-10 minutes with the mixer on med-low speed. The result was a very heavy gum suspension. Immediately upon achieving a uniform dispersion, the alcohol was added very gradually. As this was done, the suspension thinned to a flowable translucent gel dispersion (which is then stable for several months). The isopropyl alcohol and water can be used in any ratio.

One part of the xanthan gum emulsion was combined with one part of 200 mesh electrolytically reduced iron containing one weight percent sodium chloride. The formulation was printed onto a substrate in varying amounts to form cards. The printed oxygen absorbing composition was dried with heat, but enough moisture was left in the deposit so that an additional moisture source was not needed. The cards were then placed into mason jars and their oxygen absorption rates were measured as follows:

| Rate of Oxygen Absorption: | | | |
|---|---|---|---|
| | #1 | #2 | #3 |
| Weight of print deposit per cm²(per in²) | 0.409g (2.64g) | 0.611g (3.94 g) | 0.472g (3.05 g) |
| 16 hr | 45cc O₂ | 150cc O₂ | 9 58cc O₂ |
| 24 hr | 57cc O₂ | 151cc O₂ | 76cc O₂ |
| 48 hr | 76cc O₂ | 206cc O₂ | 120cc O₂ |
| 137 hr | 100cc O₂ | 222cc O₂ | 148cc O₂ |

The xanthan gum emulsion can hold much more iron without settling out than the sodium alginate emulsion, because of the higher viscosity of the xanthan gum emulsion. Iron compositions of a weight percent range of 15% to 80% are possible, with a preferred range of 50% to 70%. The iron may contain 0.1% to 5.0% sodium chloride by weight, with a preferred range of 0.5% to 1.2%.

The xanthan gum emulsion is useful because it is possible to stabilize oxygen absorbing reaction components using both alcohol and water in the emulsion. It was not necessary in this formula to add either a surfactant or a preservative although one to twc weight percent Polysorbate 80 may improve printability. Otherwise, the alcohol serves as both preservative and surfactant. The emulsion may be made without alcohol, however, in which case a surfactant and preservative should be used that serve the same function as described above with the alginate emulsion. Polysorbate 80 and Napropionate respectively, may be used as the surfactant and preservative.

When ready for printing or coating, up to 40 weight percent hydrogel may be also added to the xanthan gum emulsion. Tests of benchtop screen depositing indicate that it is possible to deposit up to 60 weight percent of 200 mesh iron suspended in the emulsion as well. The emulsion containing hydrogel is stable for several hours, while the emulsion containing 60% iron is stable for about an hour before it starts to settle out.

Because xanthan gum is generally not as salt tolerant, the xanthan gum emulsion must be made with less salt unless a more salt tolerant version of xanthan gum is used.

### EXAMPLE 3: THE MICROCRYSTALINE CELLULOSE EMULSION

The mitrocrystalline emulsion was formed of the following in weight percents:

| | |
|---|---|
| Microcrystalline cellulose | 1.8% |
| Xanthan gum | 0.2% |
| Ethanol (95%) | 44.0% |
| Water (distilled) | 54.0% |

The microcrystalline cellulose used was brand name Avicel^{®}RC-591. A planetary mixer with a wire whip was used to disperse the components. First, the water and alcohol were combined. Then, the microcrystalline cellulose was fully wetted by careful addition to the water/alcohol blend. The xanthan gum was then added to increase viscosity, It took several hours for the mixture to hydrate. After the initial blend was made and mixed for about 10 minutes, the blend was mixed for 2-3 minutes every 15 minutes over the next two hours. This blend was then stable for several weeks.

Two parts of the cellulose emulsion were combined with 3.5 parts of 200 mesh electrolytically reduced iron containing one weight percent sodium chloride and three weight percent sodium diacetate. Sodium diacetate is added to the formulation because iron preferentially removes oxygen from carbon dioxide rather than elemental oxygen In an atmosphere of oxygen and carbon dioxide without sodium diacetate. With sodium diacetate present, the iron reacts with the oxygen and not the carbon dioxide. Other acetates and acid salts known in the art may be used in place of sodium diacetate.

The formulation was then printed onto a substrate in varying amounts to form cards. The cards were placed into mason jars, which were flushed with carbon dioxide to lower the oxygen content and simulate a gas flushed container, and oxygen absorption rates were measured as follows:

| Rate of Oxygen Absorption | | | |
|---|---|---|---|
| | #1 | #2 | #3 |
| Weight of print deposit per cm²(per in²) | 0.279g (1.80 g) | 0.200g (1.29 g) | 0.174g (1.12 g) |
| 17 hr | 19cc O₂ | 9.9cc O₂ | 13cc O₂ |
| 25 hr | 20cc O₂ | 12cc O₂ | 14cc O₂ |
| 49 hr | 35cc O₂ | 25cc O₂ | 30cc O₂ |
| 137 hr | 137cc O₂ | 82cc O₂ | 64cc O₂ |

Next, two parts of the cellulose emulsion described above was combined with one part of 200 mesh electrolytically reduced iron containing two weight percent sodium chloride and 0.6 parts hydrogel. The formulation was printed onto a substrate in varying amounts to form cards. The cards were then placed into mason jars and their oxygen absorption rates were measured as follows:

| Rate of Oxygen Absorption | | | |
|---|---|---|---|
| | #1 | #2 | #3 |
| Weigh of print deposit per cm²(per in²) | 0.547g (3.53 g) | 0.525g (3.39 g) | 0.558g (3.60 g) |
| 18 hr | 46cc O₂ | 51cc O₂ | 48cc O₂ |
| 39 hr | 111cc O₂ | 91cc O₂ | 100cc O₂ |
| 47 hr | 121cc O₂ | 96cc O₂ | 120cc O₂ |
| 75 hr | 134cc O₂ | 122cc O₂ | 130cc O₂ |
| 160 hr | 135cc O₂ | 125cc O₂ | 130cc O₂ |

One part of the cellulose suspension described above was then combined with one part of 200 mesh electrolytically reduced iron containing two weight percent sodium chloride. The formulation was printed onto a substrate in varying amounts to form cards. The cards were then placed Into mason jars and their oxygen absorption rates were measured as follows:

| Rate of Oxygen Absorption | | | |
|---|---|---|---|
| | #1 | #2 | #3 |
| Weight of print deposit per cm²(per in²) | 0.467g (3.01 g) | 0.381g (2.46 g) | 0.355g (2.29 g) |
| 23 hr | 47cc O₂ | 87cc O₂ | 96cc O₂ |
| 44 hr | 74cc O₂ | 173cc O₂ | 195cc O₂ |
| 52 hr | 83cc O₂ | 200cc O₂ | 214cc O₂ |
| 75 hr | 118cc O₂ | 271cc O₃ | 275cc O₂ |
| 159 hr | 126cc O₂ | 345cc O₂ | 339cc O₂ |

The advantage of microcrystalline cellulose is that it is both alcohol tolerant and salt tolerant. Because alcohol was used In this emulsion, it was again not necessary to use a surfactant or a preservative. The alcohol serves both purposes.

The choice of alcohol used In this emulsion is limited by the food contact requirement of the formula as a whole. Much of the alcohol is lost in drying but there is also some remaining alcohol which could transfer to the product being protected. With certain products this may preclude the use of alcohol as a solvent. In such an instance, it would be necessary to add a surfactant and a preservative. Those used with the alginate formula would be satisfactory. A longer drying time would be required for such an emulsion.

The microcrystalline cellulose emulsion permits preparation of a particularly stable suspension of hydrogel or iron. A 40 weight percent hydrogel content in the emulsion will stay in suspension almost indefinitely. A 60 weight percent Iron emulsion will stay suspended for several days. In addition, the viscosity and surface tension of the microcrystalline cellulose emulsion are such that rotary screen depositing is optimum at higher speeds.

The weight percent range of microcrystalline cellulose that can be used is 0.2% to 7.0%. The preferred range is 0.9% to 2.7%. The weight percent range of xanthan gum is 0.1% to 4.0%, with a preferred range of 0.1% to 0.5%. Any ratio of ethanol to water may be used. The weight percent range of iron that may be added to the microcrystalline cellulose emulsion is 10% to 80%, with a preferred range of 40% to 60%. The weight percent of sodium chloride in the iron may be from 0.1% to 5.0%, with a preferred range of 0.8% to 1.5%. The weight percent of sodium diacetate that may be used in the iron is 0.1% to 30%, with a preferred range of 2.0% to 5.0%. A hydrogel may be added to the microcrystalline emulsion in a weight percent range of 1% to 40%, with a preferred range of 8% to 18%.

The printed oxygen absorbing composition was dried with heat, but enough moisture was left in the deposit so that an additional moisture source was not needed. If the oxygen absorbing coating or print is dried to dryness, It needs a source of moisture to initiate the oxidation of the iron in order to cause absorption of oxygen. The moisture is usually supplied by the food product with which the oxygen absorber is packaged. With dry food, the oxygen absorber needs to supply its own moisture. This may be accomplished by not fully drying the coating. Hydrogel may also be added to the emulsion before coating but, even in this case, the coating would not be fully dried so that the coating may supply its own moisture.

Hydrogen may form while the oxygen absorbing material is stored because, in the absence of oxygen, the iron will react with the water to form iron oxides and hydrogen. To prevent this, the pH of the coating or emulsion should be increased to above 9.0 using a base. The preferred bases are hydroxides, such as sodium hydroxide or potassium hydroxide. Only compatible alkaline materials may be used.

In the above-described tests, with dried coatings, a 12.9cm²(two square inch) piece of blotter paper saturated with water was placed in the mason jar as the moisture source. When water was left in the coating or a hydrogel was used, no water on blotter paper was used.

### EXAMPLE 4: THE ACRYLIC POLYMER EMULSION

The acrylic in water emulsion used was Neocryl^{®} A-5117 brand from Zeneca Resins. A formulation comprising 50 weight percent of this acrylic emulsion and 50 weight percent iron blend containing 200 mesh electrolytically reduced Iron containing 2 weight percent sodium chloride was printed on 52cm²(eight square inches) of a polypropylene substrate and dried with heat. The print weight was 2.09mg/cm² (0.0135 g/in²). The card was placed Into a mason jar along with 13cm²(two square inches) of moisture saturated blotter paper. The oxygen absorption rate was as follows:

| Rate of Oxygen Absorption | | | | |
|---|---|---|---|---|
| | #1 | #2 | #3 | Average |
| 48 hours | 13cc O₂ | 16cc O₂ | 15cc O₂ | 15cc O₂ |
| 114 hours | 13cc O₂ | 18cc O₂ | 15cc O₂ | 15cc O₂ |

Next, 1.13kg(2.5 lbs) of the Neocryl A-5117 brand emulsion was combined with 3.12 kg (6.88 lbs) iron (the iron was obtained from SCM Corporation and has the designation SCM A-220) with two weight percent NaCl and 40 g of water. This formulation, which had a viscosity of 2.2Ns/m²(2,700 centipoise), was coated onto a biaxially oriented polypropylene film using a #24 Gravure roller. A coat weight of the formulation of 8mg/cm²(0.0523 g/in²) (containing 86.5 weight percent iron) was deposited for a total film weight of 11.2mg/cm²(0.0725 g/in²).

The coated film was heated to dryness and 12.9cm²(two square inches) of blotter paper saturated with water were put In the mason jar along with the oxygen absorbing film to act as a moisture source. This coated film absorbed 1.52ccO₂/cm²(11.4 cc O₂/in²) over 39-44 hours.

Next 1.2kg (2.8 lbs) of the Neocryl A-5117 brand emulsion was combined with 2.27kg( 5.0 lbs) SCM A-220 iron with two weight percent NaCl and 34 g of Celagen brand (paratoluene sulfonyl hydrazide) blowing agent. The blowing agent produces very small bubbles inside the coating which increases the oxygen permeability of the coating. A coat weight of 11.5 g/cm²(0.0742 g/in²) (80.6 weight percent iron) of this composition, which had a viscosity of 141Ns/m² (1,410 centipoise), was then coated onto a polypropylene film, as above, for a total film weight of 14.6mg/cm² (0.0943 g/in²). This coated film absorbed 1.52cc O₂/cm² (9.8cc O₂/in²) over 39-44 hours.

In the acrylic emulsion, the weight percent range of Neocryl A-5117 brand acrylic polymer may be 15% to 90%, with a preferred range of 25% to 35%. The iron used in the emulsion may be in a weight percent range of 10% to 85%, with a preferred range of 65% to 75%. The iron may be combined with a weight percent range of 0.1% to 5.0% sodium chloride, with a preferred range for the sodium chloride of 1.5% to 2.5%.

The ratio of acrylic emulsion to iron also depends on the acrylic emulsion used and the desired viscosity. Water is added to adjust the viscosity, which accordingly increases the iron content. These ranges would be different for other acrylic emulsions. Such is the case for all of the emulsions disclosed herein.

### EXAMPLE 5: THE POLYVINYL ACETATE EMULSION

The polyvinyl acetate in water emulsion used was brand name Vinac XX-210 from Air Products and Chemicals, Inc. Forty-three weight percent of this polyvinyl acetate emulsion was combined with 57 weight percent Iron blend containing 200 mesh electrolytically reduced iron containing two weight percent sodium chloride. This formulation was then printed on eight square inches of a polypropylene substrate with a print weight of 4.03mg/cm² (0.026 g/ln² ). The resulting card was placed into a mason jar and the oxygen absorption rate was measured as follows:

| Rate of Oxygen Absorption | | | | |
|---|---|---|---|---|
| | #1 | #2 | #3 | Average |
| 48 hours | 22cc O₂ | 22cc O₂ | 22cc O₂ | 22cc O₂ |
| 114 hours | 25cc O₂ | 25cc O₂ | 25cc O₂ | 25cc O₂ |

Next, 0.907 kg (2.0 lbs) of the Vinac XX-210 brand emulsion was combined with 1.21kg (2.67 lbs). SCM A-220 iron and with two weight percent NaCl. This formulation was coated onto a biaxially oriented polypropylene film using a #24 gravure roller. A coat weight of the formulation of 5.27mg/cm² (0.034g/in²). containing 70.8 weight percent iron) was deposited for a total film weight of 8.37 mg/cm² (0.054 g/in²). The coated film was completely dried with heat. When the samples were tested in a mason jar, blotter paper saturated with water was placed inside the mason jar to act as a moisture source. This coated film absorbed 7.13 ccO₂/cm² (4.6cc O₂/in²) over 39-44 hours.

The weight percent range for the Vinac XX-210 brand polyvinyl acetate may be 15% to 90%, with a preferred range of 40% to 50%. The iron may be added **in** a weight percent range of 10% to 85%, with a preferred range of 50% to 60%. The weight percent of sodium chloride in the iron may be from 0.1% to 5.0%, with a preferred range of 1.5% to 2.5%.

Water may be added to adjust the viscosity and thus increase the iron content. The ratio of iron to polyvinyl acetate emulsion may be different for other polyvinyl acetate emulsions.

### EXAMPLE 6: THE VINYL ACETATE-ETHYLENE COPOLYMER EMULSION

The vinyl acetate-ethylene copolymer in water emulsion was Airflex 440 brand from Air Products and Chemicals, Inc. A formulation of 70 weight percent of this vinyl acetate-ethylene emulsion was combined with 30 weight percent iron blend containing 200 mesh electrolytically reduced iron containing two weight percent sodium chloride and printed on eight square inches of a polypropylene substrate at a print weight of 2.32mg/cm² (0.015 g/in²). The resulting card was placed into a mason jar, and the oxygen absorption rate was measured as follows:

| Rate of Oxygen Absorption | | | | |
|---|---|---|---|---|
| | #1 | #2 | #3 | Average |
| 48 hours | 11cc O₂ | 10cc O₂ | 8cc O₂ | 10cc O₂ |
| 114 hours | 12cc O₂ | 10cc O₂ | 10cc O₂ | 11cc O₂ |

The coated film was completely dried with heat. When the samples were tested in a mason jar, blotter paper saturated with water was placed inside the jar to act as a molsture source.

Next, another emulsion was prepared using Airflex 400 brand rather than Airflex 440 brand. In this example 1.76kg (3.88 lbs) of the Airflex 400 brand emulsion were combined with 2.38kg (5.25 lbs) SCM A-220 iron with two weight percent NaCl and 300 g of water. This formulation, which had a viscosity of 4.55kg/m² (4,550 centipoise), was coated onto a biaxially oriented polypropylene film using a #24 gravure roller. A coat weight of the formulation of 6.56mg/cm² (0.0423g/in²) (containing 71.1 weight percent iron) was deposited for a total film weight of 9.68mg/cm² (0.0625 g/in²). The coated film was completely dried with heat. When the samples were tested in a mason Jar, blotter paper saturated with water was placed inside the mason jar to act as a moisture source. This coated film absorbed 0.558ccO₂/cm² (3.6 cc O₂/in²) over 39-44 hours and 1.53. ccO₂/cm² (9.9 cc O₂/in²) over 306-312 hours.

Next 1.76kg (3.88lbs) of the Airflex 400 brand emulsion was combined with 2.55kg (5.63lbs) SCM A-220 iron and with two weight percent NaCl and 150 g of water. A coat weight of 6.93mg/cm² (0.0447 g/in²)(72.7 weight percent iron) of this composition, which had a viscosity of ZNs/m² (2,000 centipoise), was then coated onto a polypropylene film, as above, for a total film weight of 10.0mg/cm² (0.0648g/in²). The coated film was completely dried with heat. When the samples were tested in a mason jar, blotter paper saturated with water was placed Inside the mason jar to act as a moisture source. This coated film absorbed 0.51cc O₂/cm² (3.3 ccO₂/in²) over 39-44 hours and 1.75 ccO₂/cm² (11.3cc O₂/in²) over 306-312 hours.

The weight percent range of the Airflex 440 brand emulsion may be from 15% to 99% of the composition, with a preferred range of 65% to 75%. A weight percent range from 1.0% to 85% iron may be added to the composition, with a preferred range of 25% to 35%. A weight percent range from 0.1% to 5.0% sodium chloride may be used in the iron, with a preferred range of 1.5% to 2.5%.

Water may be added to adjust the viscosity and thus Increase the iron content. The ratio of iron to the vinyl acetate-ethylene copolymer emulsion would be different for other vinyl acetate-ethylene copolymer emulsions.

The weight percent range of the Airflex 400 brand emulsion may be from 15% to 99% of the composition, with a preferred range of 35% to 50%. A weight percent from 1% to 85% iron may be added to the composition, with a preferred range of 50% to 65%. A weight percent range from 0.1% to 5% sodium chloride may be used in the iron, with a preferred range of 1.5% to 2.5%. Water can also be added to this emulsion to adjust the viscosity and thus increase iron content.

These suspensions can also be printed or coated onto a film and only partially heat dried so that no moisture source is needed. When this is done, these oxygen absorbing materials can be used in dry environments. When moisture is left In the oxygen absorber, the pH of the suspension must be raised to above 9.0 so that hydrogen will not be formed when the oxygen absorbers are stored.

Other experiments were also performed to show the efficacy of oxygen-absorbing emulsion having less than 10.0 weight percent of the oxygen absorbent contained in the emulsion.

### EXAMPLE 7

A polypropylene film was coated with a composition of 50.0 grams of S.C. Johnson Jonbond 751 Acrylic emulsion and 2.6 grams of SCM A-131 325 mesh iron containing 1.0% sodium chloride. The final dry coating had an iron content of 8.6% and, a coat weight of 7.75mg/cm² (0.05 grams per square inch). After 9 days, this coating absorbed 0.010cc O₂ (1.94 cc of oxygen per 5 square inches).

### EXAMPLE 8

A polypropylene film was coated with a composition of 50.0 grams S.C. Johnson Jonbond 751 Acrylic emulsion and 1.2 grams of SCM A-131 325 mesh iron containing 1.0% sodium chloride. The final dry coating had an iron content of 4.2% and a coat weight of 6.2mg/cm² (0.04 grams per square inch) after 6 days. After 9 days, this coating absorbed 0.060cc O₂/cm² (1.94 cc of oxygen per 5 square inches).

### EXAMPLE 9

A polypropylene film was coated with a composition of 50.0 grams Air Products & Chemical Airflex 400 vinyl acetate ethylene copolymer emulsion and 2.6 grams of SCM A-131 325 mesh iron containing 1.0% sodium chloride. The final dry coating had an iron content of 8.6% and a coat weight of 9.3g/cm²(.06 grams per square inch). This coating absorbed an average of (2.10 cc of oxygen per 5 square inches 0.065g/cm² after 9 days.

### EXAMPLE 10

A polypropylene film was coated with a composition of 50.0 grams Air Products & Chemical Airflex 400 vinyl acetate ethylene copolymer emulsion and 1.2 grams of SCM A-131 325 mesh iron containing 1.0% sodium Chloride. The final dry coating had an iron content of 4.2% and a coat weight of 0.0175g/cm²(0.5 grams per square inch). This coating absorbed an average of 0.0453cc O₂/cm²(1.46 cc of oxygen per 5 five square inches) after 6 days. After 9 days, this coating absorbed 0.0852 cc O₂/cm² (3.07 cc of oxygen per 5 square inches).

### EXAMPLE 11

A polypropylene film was coated with a composition of 50.0 grams of Air Products & Chemicals' Airflex XX-210 vinyl acetate homopolymer emulsion and 2.6 grams of SCM A 1-131 325 mesh iron containing 1.0% sodium chloride. The final dry coating had an iron content of 8.6% and a coat weight of 1.75mg/cm² (.05 grams per square inch). After 9 days, this coating absorbed an average of 0.025 cc O₂/cm²/ (0.81 cc of oxygen per 5 square inches).

### EXAMPLE 12

A polypropylene film was coated with a composition of 50.0 grams of Air Products & Chemicals' Airflex XX-210 vinyl acetate homopolymer emulsion and 1.2 grams of SCM A-131 325 mesh iron containing 1.0% sodium chloride. The final dry coating had on iron content of 4.2% and a coat weight of 0.9mg/cm² (0.07 grams per square inch). This coating absorbed an average of 0.03 ccO₂/cm² (0.97 cc oxygen per 5 square inches) after 6 days. After 9 days, this coating absorbed 0.0753 ccO₂/cm² (2.43 cc of oxygen per 5 square inches).

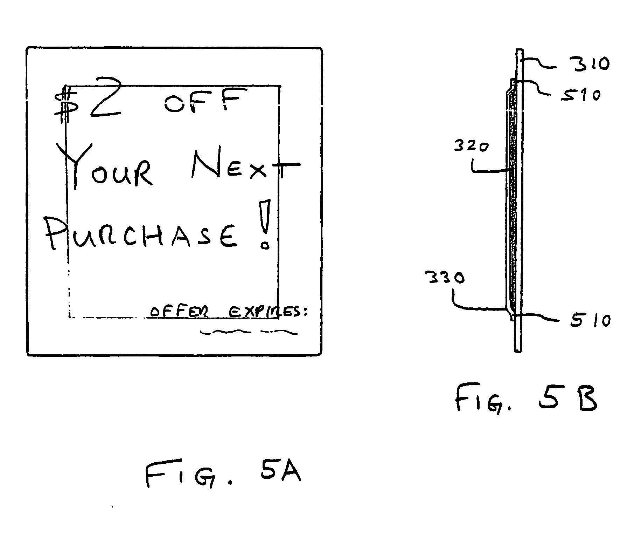

As discussed above with respect to Fig. 3, thin film cover layer 330 is disposed over oxygen absorbing composition 320. Thin film cover layer 330 may be applied by printing or other known techniques. In the embodiment illustrated in Fig. 5, thin film cover layer 330 is secured over oxygen absorbing composition 320 by adhering both to oxygen absorbing composition 320 Itself and to the periphery 510 of substrate 310 where thin film cover layer 330 and substrate 310 contact directly (without oxygen absorbing composition 320 being disposed therebetween). It is to be noted that an additional adhesive could be used between thin film cover layer 330 and substrate 310 at periphery 510 where they contact directly, or, in alternative embodiments, the adhesion between thin film cover layer 330 and substrate 310 by virtue of their relative physical characteristics may be sufficient such that no additional attachment means is needed.

Thin film cover layer 330 is an oxygen-permeable (but not porous) polymer coating on top of oxygen absorbing compostion 320. Thin film cover layer 330 is a single layer that forms a film over oxygen absorbing composition 320. Oxygen absorbing composition 320, as described in more detail above, is a flexible film that conforms to the desired shape of the packages of many different products with which it may be used. Thin film cover layer 330 must be flexible enough to remain adhered to oxygen absorbing composition 320 regardless of the shape assumed by oxygen absorbing composition 320. Thin film cover layer 330 is a thin coating layer that adheres to the smooth continuous film formed by oxygen absorbing composition 320. There is no need for an intermediate adhesive layer between oxygen absorbing composition 320 and thin film cover layer 330.

By oxygen permeable, it is meant that the oxygen transmission rate through the thin film should be at least 0.0135 cc/cm²/day(10 cc/100in²/day) at 22.8°C (73°F)50% RH, and preferably greater than 0.031 cc/cm²/day (20 cc/100in²/day)at 22.8°C(73°F) 50% RH, but still not porous to oxygen.

Thin film cover layer 330 is preferably made of a polymer dispersed In water. Organic solvents typically cannot be used when an intended use for the package material is to absorb oxygen **in** food containers. Polymer dispersions in water are acceptable for food contact. The solids content of the polymer in the water dispersion Is **in** the range of 50-100%. After drying, the thin flim cover layer is oxygen permeable as defined herein.

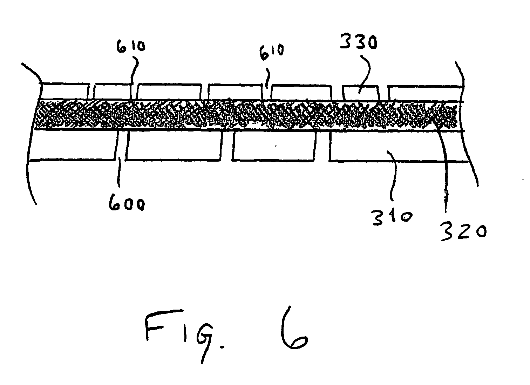

It should be noted, however, that although the thin film cover layer is made from an oxygen permeable material as defined herein, the overall rate of oxygen absorption can be additionally controlled by forming perforations or small holes, namely micro - perforations, in the thin film cover layer, the base layer, or both. By adding such micro-perforations, the amount of oxygen which can reach the oxygen absorbing composltion can be increased. Thus, the option of adding or selectively adding a certain density of micro-perforations In the layers surrounding the oxygen absorbing composition can aid in the overall performance of the package material. An example of the micro-perforations Is shown in Fig. 6 which is a cross section of the layered packaging material in which micro-perforations 600 are formed in the base layer substrate, and micro-perforations 610 are shown in the thin film cover layer.

Various exemplary polymers useful for thin film cover layer 330 were tested over oxygen absorbing compositions (without micro-perforations). The results of those tests are shown below in Table I. In these examples, an oxygen absorbing composition consisting of 25% acrylic resin and 75% 325 mesh Iron powder blended with 2% sodium chloride was first coated onto a polyester film and then dried. The coating was done with a gravure cylinder and the finished dry coat weight was 14.0-16·7 kg (30.8-36.9 lbs.) per ream. Each of the various top cover polymers listed in Table I were then applied over the oxygen absorbing composition using a 0.3 draw down bar to obtain a 0.3 ml coating. For each coating composition, a 32.3cm²(5 quare inch) sample was placed in a sealed vessel at 100% relative humidity and room temperature. Samples were taken with a syringe to measure the oxygen content in the sealed vessel in order to determine the rate of oxygen absorption by each of the samples. The results reported in Table I are the average of three tests for each sample. All of the samples adhered well to the oxygen absorbing composition.

**TABLE I**

| **RATE OF OXYGEN ABSORPTION OF SAMPLES WITH VARIOUS FILM COVER LAYERS (cc of oxygen per (square inch) cm²)** | | | | | |
|---|---|---|---|---|---|
| | | After | After | After | After |
| | SOLIDS | 3 | 6 | 10 | 13 |
| | CONTENT | Days | Days | Days | Days |
| Standard (no cover layer) | | (9.6)1·49 | (11.3)1·75 | (12.4)1·92 | (13.5)2·09 |
| Tyvek (film layer) | | (8.2) 1·27 | (11.5)1·78 | (13.5)2·09 | (14.7)2·28 |
| Cellulose Acetate (film layer) | | (8.8)1·36 | (10.0)1·55 | (10.9)1·69 | (12.1)1·88 |
| Airflex 400 (Vinyl Acetate Ethylene Copolymer) | 55.0% | (4.8)0·744 | (5.4)0·837 | (9.3)1·44 | (11.0)1.71 |
| Pierce & Stevens Latiseal A-7734A (Ethylene Vinyl Acetate) | 44.0% | (4.9)0·713 | (7.8)1·21 | (10.5)1·63 | (10.7)1.66 |
| Airflex 300 | | | | | |
| (Vinyl Acetate) | 55.0% | (5.9)0·915 | (6.9)1·07 | (9.1)1·41 | (10-1)1·57 |
| Vinac XX-210 (Vinyl Acetate Homopolymer) | 55.0% | (3.7)0.574 | 5.1)0·791 | (8.1)1·26 | (9.3)1·44 |
| AirfleX 421 (Acetate Ethylene Copolymer) | 52.0% | (4.2)0·651 | (5.5)0.853 | (7.7)1.19 | (8.7)1.35 |
| Vycar 526 (Plasticized Vinyl Chloride Polymer) | 57.5% | (2.7)0·419 | (3.6)0·558 | (5.3)0·822 | (6.8)1·05 |
| Jonbond 751 (Acrylic Emulsion) | 56.0% | (2.3)0.357 | (4.2)0.651 | (6.1)0.946 | (6.7)1.04 |
| Allied Signal 316 (Oxidized Polyethylene Homopolymer) | 30.0% | (3.2)0·496 | (4.4) 0·682 | (5.7)0·884 | 6.3)0·977 |
| Witco W232 (Aqueous Polyurethane Dispersion) | 29.8% | (1.9)0.295 | (3.4)0.527 | (5.6)0.868 | (6.2)0.961 |

The amount of oxygen that was absorbed by the oxygen absorbing composition **in** each of the samples reported in Table I is dependent upon the permeability of the cover layer. Tyvek showed the greatest permeability of the samples that are reported, with progressively decreasing permeability to the Witco W232 (Aqueous Polyurethane Dispersion) at the bottom of Table I. Other water voluble polymers known in the art may also be used in accordance with the present invention as thin film cover layer 330.

The methods and equipment used to print information on the base or film layer (or both) are known to those skilled in the art. These methods would include gravure printing, screen printing, flexographic printing, or four color process printing.

An optional additional layer could be used atop the printing layer. Such a layer would be an overprint layer. Preferably, the optional overprint layer would be a varnish, and most preferably a patterned varnish, so that the vanish overlayer only covers the printing. The purpose of the overlayer would be to prevent the printing from separating from its substrate (base layer or film layer), and also to prevent direct contact between cm² the ink used In the printing and the contents of the package. Of course, any such inks and varnishes would have to be of suitable, approved compatibility with the intended contents of the package, such as food-grade inks and varnishes for good, or pharmaceutical grade inks and varnishes for pharmaceuticals, etc. Typical preferred varnishes comprise polyethylene, urethane, and acrylic varnishes.

In another embodiment of the invention, the oxygen absorbing composition is applied to both sides of the substrate and both sides are covered by a thin film cover layer.

Although illustrated and described herein with reference to certain specific embodiments, the present invention is nevertheless not intended to be limited to the details shown. Rather, various modifications may be made in the details within the scope of the claims

## Claims

1. A support structure for supporting a food product in a package, wherein said support structure is formed of an oxygen-absorbing packaging material comprising:
a base layer;
an oxygen absorbing composition disposed on at least one side of the base layer, said oxygen absorbing composition comprising an oxygen absorbent contained in an emulsion;
a film layer disposed on said oxygen absorbing layer,
at least one of said base layer and said film layer having printed indicia to indicate information relating to a product to be contained within said packaging material.

2. The support structure of claim 1 wherein said emulsion is an alginate gel in water emulsion.

3. The support structure of claim 1 wherein said emulsion is a xanthan gum in water emulsion.

4. The support structure of claim 1 wherein said emulsion is a microcrystalline cellulose in water emulsion.

5. The support structure of claim 1 wherein said emulsion is an acrylic polymer in water emulsion.

6. The support structure of claim 1 wherein said emulsion is a polyvinyl acetate in water emulsion.

7. The support structure of claim 1 wherein said emulsion is a vinyl acetate-ethylene copolymer in water emulsion.

8. The support structure of any preceding claim wherein said oxygen absorbent comprises a metal and a salt, said metal is selected from the group consisting of iron, aluminium, copper, zinc, titanium, magnesium, tin, sodium, and manganese, and said salt is selected from the group consisting of sodium chloride, sodium sulfate, potassium chloride, ammonium chloride, ammonium sulfate, calcium chloride, sodium phosphate, calcium phosphate, and magnesium chloride.

9. The support structure of any preceding claim further comprising a hydrogel suspended in said emulsion.

10. The support structure of any preceding claim further comprising a surfactant in said emulsion.

11. The support structure of any preceding claim further comprising a preservative in said emulsion.

12. The support structure of any preceding claim wherein said emulsion comprises alcohol as a component.

13. The packaging material of any preceding claim wherein said film layer has perforations formed therein.

14. The packaging material of any preceding claim wherein said base layer is a rigid paper.

## Patentansprüche

1. Trägerstruktur zum Tragen eines Nahrungsmittelprodukts in einer Verpackung, wobei die Trägerstruktur aus einem sauerstoffabsorbierenden Verpackungsmaterial gebildet ist, umfassend:
eine Basisschicht;
eine sauerstoffabsorbierende Zusammensetzung, die auf wenigstens einer Seite der Basisschicht angeordnet ist, wobei die sauerstoffabsorbierende Zusammensetzung ein in einer Emulsion enthaltenes Sauerstoffabsorptionsmittel umfasst;
eine Filmschicht, die auf der sauerstoffabsorbierenden Schicht angeordnet ist;
wobei wenigstens eines von der Basisschicht und der Filmschicht aufgedruckte Angaben aufweist, um Informationen über ein Produkt anzugeben, das in dem Verpackungsmaterial enthalten sein soll.

2. Trägerstruktur gemäß Anspruch 1, wobei die Emulsion eine Alginatgel-in-Wasser-Emulsion ist.

3. Trägerstruktur gemäß Anspruch 1, wobei die Emulsion eine Xanthangummi-in-Wasser-Emulsion ist.

4. Trägerstruktur gemäß Anspruch 1, wobei die Emulsion eine mikrokristalline-Cellulose-in-Wasser-Emulsion ist.

5. Trägerstruktur gemäß Anspruch 1, wobei die Emulsion eine Acrylpolymer-in-Wasser-Emulsion ist.

6. Trägerstruktur gemäß Anspruch 1, wobei die Emulsion eine Polyvinylacetat-in-Wasser-Emulsion ist.

7. Trägerstruktur gemäß Anspruch 1, wobei die Emulsion eine Vinylacetat-Ethylen-Copolymer-in-Wasser-Emulsion ist.

8. Trägerstruktur gemäß einem der vorstehenden Ansprüche, wobei das sauerstoffabsorbierende Mittel ein Metall und ein Salz umfasst, wobei das Metall ausgewählt ist aus der Gruppe, bestehend aus Eisen, Aluminium, Kupfer, Zink, Titan, Magnesium, Zinn, Natrium und Mangan, und das Salz ausgewählt ist aus der Gruppe, bestehend aus Natriumchlorid, Natriumsulfat, Kaliumchlorid, Ammoniumchlorid, Ammoniumsulfat, Calciumchlorid, Natriumphosphat, Calciumphosphat und Magnesiumchlorid.

9. Trägerstruktur gemäß einem der vorstehenden Ansprüche, ferner umfassend ein in der Emulsion suspendiertes Hydrogel.

10. Trägerstruktur gemäß einem der vorstehenden Ansprüche, ferner umfassend ein grenzflächenaktives Mittel in der Emulsion.

11. Trägerstruktur gemäß einem der vorstehenden Ansprüche, ferner umfassend ein Konservierungsmittel in der Emulsion.

12. Trägerstruktur gemäß einem der vorstehenden Ansprüche, wobei die Emulsion Alkohol als eine Komponente umfasst.

13. Verpackungsmaterial gemäß einem der vorstehenden Ansprüche, wobei die Filmschicht darin gebildete Perforationen aufweist.

14. Verpackungsmaterial gemäß einem der vorstehenden Ansprüche, wobei die Substratschicht ein steifes Papier ist.

## Revendications

1. Structure de support pour le support d'un produit alimentaire dans un emballage, ladite structure de support étant formée d'un matériau d'emballage absorbant l'oxygène comprenant :
une couche de base ;
une composition absorbant l'oxygène disposée sur au moins un côté de la couche de base, ladite composition absorbant l'oxygène comprenant un absorbeur d'oxygène contenu dans une émulsion ;
une couche de film disposée sur ladite couche absorbant l'oxygène ;
au moins une de ladite couche de base et de ladite couche de film comportant des signes imprimés pour indiquer des informations concernant un produit destiné à être contenu à l'intérieur dudit matériau d'emballage.

2. Structure de support selon la revendication 1, dans laquelle ladite émulsion est un gel d'alginate dans une émulsion d'eau.

3. Structure de support selon la revendication 1, dans laquelle ladite émulsion est une gomme xanthane dans une émulsion d'eau.

4. Structure de support selon la revendication 1, dans laquelle ladite émulsion est une cellulose microcristalline dans une émulsion d'eau.

5. Structure de support selon la revendication 1, dans laquelle ladite émulsion est un polymère acrylique dans une émulsion d'eau.

6. Structure de support selon la revendication 1, dans laquelle ladite émulsion est un acétate de polyvinyle dans une émulsion d'eau.

7. Structure de support selon la revendication 1, dans laquelle ladite émulsion est un copolymère d'acétate de vinyle-éthylène dans une émulsion d'eau.

8. Structure de support selon l'une quelconque des revendications précédentes, dans laquelle ledit absorbeur d'oxygène comprend un métal et un sel, ledit métal est sélectionné dans le groupe constitué du fer, de l'aluminium, du cuivre, du zinc, du titane, du magnésium, de l'étain, du sodium, et du manganèse, et ledit sel est sélectionné dans le groupe constitué du chlorure de sodium, du sulfate de sodium, du chlorure de potassium, du chlorure d'ammonium, du sulfate d'ammonium, du chlorure de calcium, du phosphate de sodium, du phosphate de calcium, et du chlorure de magnésium.

9. Structure de support selon l'une quelconque des revendications précédentes, comprenant en outre un hydrogel en suspension dans ladite émulsion.

10. Structure de support selon l'une quelconque des revendications précédentes, comprenant en outre un tensioactif dans ladite émulsion.

11. Structure de support selon l'une quelconque des revendications précédentes, comprenant en outre un conservateur dans ladite émulsion.

12. Structure de support selon l'une quelconque des revendications précédentes, dans laquelle ladite émulsion comprend un alcool comme composant.

13. Matériau d'emballage selon l'une quelconque des revendications précédentes, dans lequel ladite couche de film comporte des performations formées dans celle-ci.

14. Matériau d'emballage selon l'une quelconque des revendications précédentes, dans lequel ladite couche de substrat est un papier rigide.
